Europäisches Patentamt

European Patent Office

Office européen des brevets

(11) Veröffentlichungsnummer: **0 291 790 B1**

(12) **EUROPÄISCHE PATENTSCHRIFT**

(45) Veröffentlichungstag der Patentschrift: **22.01.92**

(21) Anmeldenummer: **88107327.4**

(22) Anmeldetag: **06.05.88**

(51) Int. Cl.⁵: **H04Q 11/04**

(54) **Schaltungsanordnung für Fernmeldevermittlungsanlagen, insbesondere PCM-Zeitmultiplex-Fernsprechvermittlungsanlagen, mit einem Zentralkoppelfeld und mit an dasselbe angeschlossenen dezentralen Teilkoppelfeldern.**

(30) Priorität: **22.05.87 DE 3717386**

(43) Veröffentlichungstag der Anmeldung:
**23.11.88 Patentblatt 88/47**

(45) Bekanntmachung des Hinweises auf die Patenterteilung:
**22.01.92 Patentblatt 92/04**

(84) Benannte Vertragsstaaten:
**AT BE CH DE FR GB IT LI NL SE**

(56) Entgegenhaltungen:
**EP-A- 0 039 077**
**EP-A- 0 254 855**
**FR-A- 2 180 171**
**FR-A- 2 353 193**

**NACHRICHTENTECHNISCHE ZEITSCHRIFT N.T.Z., Band 38, Nr. 10, Oktober 1985, Seiten 708-712, Berlin, DE; F.C. KUZNIK: "Vermittlungssystem 5ESS-PRX für den öffentlichen Fernsprechverkehr"**

(73) Patentinhaber: **SIEMENS AKTIENGESELL-SCHAFT**
**Wittelsbacherplatz 2**
**W-8000 München 2(DE)**

(72) Erfinder: **Seeger, Helmut, Dipl.-Ing.**
**Stobäusstrasse 42**
**W-8190 Wolfratshausen(DE)**
Erfinder: **Leichum, Axel, Dipl.-Ing.**
**Konrad-Celtis-Strasse 74**
**W-8000 München 70(DE)**
Erfinder: **Maher, Anthony, Dipl.-Ing.**
**Höglwörtherstrasse 266**
**W-8000 München 70(DE)**

REVIEW OF THE ELECTRICAL COMMUNICA-TIONS LABORATORIES, Band 34, Nr. 3, Mai 1986, Seiten 373-379, The Research and Development Headquarters, Nippon Telegraph and Telephone Corporation, Tokyo, JP; H. FUKUDA et al.: "Application of VLSI processors to digital switching systems"

TELECOMMUNICATION SWITCHING state of the art impact on networks and services, Proceedings of the International Switching Symposium, 7.-11. Mai 1984, Florence, edited by: AEI, Part 1, Seiten 1-6, North-Holland, Amsterdam, NL; A. MOLINARI et al.: "MC 240 - A remote multiplexer - concentrator for local applications"

NATIONAL TELECOMMUNICATIONS CONFE-RENCE, 29. November - 31. Dezember 1981, New Orleans, Louisiana, Innovative Tele-communications - Key to the Future, Band 2/4, Seiten 1-5, IEEE; D.L. JACKSON et al.: "GTD-5 EAX RSU survivabilty"

IEEE INTERNATIONAL CONFERENCE ON COMMUNICATIONS '86, 22.-25. Juni 1986, To-ronto, Integrating the World trough Comm-unications, Conference Record, Band 2/3, Seiten 1100-1104, IEEE; E. OLSSON et al.: "The application of remote switching units. Experiences and future requirements"

## Beschreibung

Durch die Zeitschrift "telcom report", vierter Jahrgang (1981), Beiheft "Digitalvermittlungssystem EWSD", insbesondere durch den auf Seite 19 beginnenden Artikel, sind bereits PCM-Fernsprechvermittlungsanlagen bekannt, die mit einem mehrstufigen, Zeitmultiplex-Eingänge und Zeitmultiplex-Ausgänge aufweisenden zentralen Koppelfeld und einem zentralen Prozessor, sowie mit einer Mehrzahl von einem Anschluß von Zeitmultiplex-Verbindungsleitungen dienenden Anschlußgruppen ausgestattet sind, von denen jene an einen Zeitmultiplex-Eingang und einen Zeitmultiplex-Ausgang des Koppelfeldes angeschlossen ist, und von denen jede eine Mehrzahl von dem Anschluß jeweils einer Zeitmultiplex-Verbindungsleitung dienenden Anschlußeinheiten aufweist, die ihrerseits mit einer zu der betreffenden Anschlußgruppe gehörenden Zeitmultiplex-Koppeleinrichtung verbunden und über diese mit Kanälen des der jeweiligen Anschlußgruppe entsprechenden Zeitmultiplex-Einganges und des entsprechenden Zeitmultiplex-Ausganges des Koppelfeldes verbindar ist.

In Fernsprechvermittlungsanlagen dieser Art fassen Zeitmultiplex-Verbindungsleitungen immer eine größere Anzahl von zum Beispiel vierundzwanzig, dreißig, sechzig oder noch mehr Kanalpaaren zusammen. Ein Kanalpaar umfaßt immer einen Kanal in der einen Übertragungsrichtung und einen Kanal in der anderen Übertragungsrichtung. Ein Kanalpaar ist pro Verbindung erforderlich (abgesehen von sogenannten Mehrkanalverbindungen). Wie die Darstellung in der genannten Zeitschrift zeigt, ist eine größere Anzahl von Anschlußgruppen pro Fernsprechvermittlungsstelle mit einem sicherheitshalber gedoppelten Koppelfeld vorgesehen. Jede Anschlußgruppe umfaßt eine Mehrzahl von Anschlußeinheiten. Es gibt Anschlußeinheiten verschiedener Art je nach der speziellen Art der angeschlossenen Leitungen. Teilnehmerleitungen sind in der Regel Analog-Leitungen, können aber auch in PCM-Technik realisiert sein. Verbindungsleitungen können ebenfalls Analog-Leitungen sein. Sie können aber auch als PCM-Kanäle realisiert sein, die in bekannter Weise in PCM-Übertragungssytemen mit jeweils einer Zeitmultiplex-Leitung zusammengefaßt sind. Die genannten Anschlußeinheiten sind unterschiedlich aufgebaut, und zwar jeweils entsprechend der betreffenden Technik der anzuschließenden Teilnehmer- und Verbindungsleitungen, und je nachdem, ob hierbei Analog-Technik oder Zeitmultiplex-Technik realisiert ist. In der Regel wird eine Anschlußeinrichtung für eine Mehrzahl von zum Beispiel acht Analog-Teilnehmerleitungen vorgesehen. Ebenso wird eine Anschlußeinheit für eine Mehrzahl von Analog-Verbindungsleitungen vorgesehen. Pro Zeitmultiplex-Verbindungsleitung eines PCM-Übertragungssystems wird in der Regel eine eigene Anschlußeinrichtung vorgesehen. Ebenso gut wäre es aber auch möglich, an eine einzige Anschlußeinrichtung mehr als eine Zeitmultiplex-Verbindungsleitung eines PCM-Übertragungssystems anzuschließen, zum Beispiel zwei Zeitmultiplex-Leitungen.

Durch naturgemäße Zusammenfassung einer weiter oben beispielsweise angegebenen Anzahl von Kanälen jeweils in einem einzigen PCM-Übertragungssytem ist deren Zuordnung selbstverständlich auch nur zu einer einzigen Verkehrsrichtung bedingt, denn die betreffenden Kanäle müssen ja den gleichen Verlauf nehmen wie die Zeitmultiplex-Leitung dieses PCM-Übertragungssystems. Da ebenso aufgrund dieser Zusammenfassung der Anschluß eine Zeitmultiplex-Leitung eines PCM-Übertragungssystems an eine Anschlußeinheit auch eine Zuordnung der betreffenden Kanäle zu einer einzigen Anschlußeinheit und damit zu einer einzigen Anschlußgruppe zwangsläufig erfordert ist, ergibt sich für den Fall, daß für eine Verkehrsrichtung nur die Kanäle (Kanalpaare) eines einzigen PCM-Übertragungssystems bereitgestellt sind, daß die einem Ausfall einer Anschlußgruppe sämtliche Verbindungsmöglichkeiten in der betreffenden Verkehrsrichtung ausfallen, also in vermittlungstechnischer Hinsicht ein ganzes Richtungsbündel.

Um den zuvor erläuterten Effekt des Totalausfalles eines Richtungsbündels lediglich aufgrund des Ausfalles einer Anschlußgruppe zu vermeiden, ist bisher in bekannten Fällen vorgesehen worden, zwei voneinander unabhängige PCM-Übertragungssysteme pro Verkehrsrichtung vorzusehen, und die Zeitmultiplex-Leitungen dieser Übertragungssysteme an Anschlußeinheiten zweier verschiedener Anschlußgruppen anzuschalten. Dies ist besonders bei kleinen Richtungsbündeln wegen der Dopplung der PCM-Übertragungssysteme aufwendig und unwirtschaftlich.

Um nun in einer Schaltungsanordnung der eingangs angegebenen Art im Hinblick auf die Möglichkeit eines Ausfalles einer Anschlußgruppe eine Doppelung eines PCM-Übertragungssystems pro Verkehrsrichtung nicht vorsehen zu müssen und um dabei zu vermeiden, daß alleine aufgrund des Ausfalles einer Anschlußgruppe eine ganze Verkehrsrichtung, das heißt der Kanalpaare des betreffenden PCM-Übertragungssystems, ausfallen kann bzw. muß, ist bereits für eine Fernsprechvermittlungsanlage der eingangs angegebenen bekannten Art vorgeschlagen worden, jeweils zwei Anschlußgruppen paarweise einander zuzuordnen, wobei weiterhin vorgesehen ist, daß die Anschlußeinrichtungen jeder dieser beiden Anschlußgruppen, die im Normalbetrieb mit der Zeitmultiplex-Koppeleinrichtung ihrer eigenen Anschlußgruppe verbunden sind, im Notbetrieb einer der beiden Anschlußgruppen zu der Zeitmultiplex-Koppeleinrichtung der jeweils anderen Anschlußgruppe umschaltbar sind.

Dies bewirkt in dem bekannten Fall, daß ein PCM-Übertragungssystem mit seinen Kanälen bei Ausfall der betreffenden Anschlußgruppe weiter betrieben werden kann. In diesem Falle wird also eine doppelte Anzahl von Kanälen (Kanalpaaren) über eine Anschlußgruppe, d.h. über die jeweils andere der beiden einander paarweise zugeordneten Anschlußgruppen vermittelt. Dies führt zwar zu einer besonders großen verkehrsmäßigen Belastung der betreffenden Anschlußgruppe und zu einer Mehrung von Gassenbesetztfällen, jedoch haben sämtliche über die betreffenden Kanäle im Aufbau befindlichen Verbindungen die gleiche Erfolgs-Chance. Dabei kann es sich ergeben, daß eine Mehrzahl von Verkehrsrichtungen nur noch mit der halben Verkehrsleistung betrieben werden kann. Jedoch können Verbindungen in sämtliche Verkehrsrichtungen überhaupt noch hergestellt werden und es wird der Totalausfall der primär betroffenen Verkehrsrichtung bzw. Verkehrsrichtungen vermieden.

Die Erfindung bezieht sich nun auf eine Schaltungsanordnung ähnlicher Art, und zwar auf eine Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld samt einem unter anderem dessen Steuerung sowie einer hierfür erforderlichen Schaltkennzeichenverarbeitung dienenden zentralen Prozessor vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit je einer dezentralen Steueeinrichtung zur Schaltkennzeichenaufnahme von diesen Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen in diesen Anschlußgruppen Teilkoppelfelder innenseitig über Gruppen von Linkleitungen gruppenweise getrennt mit Koppelfeldanschlüssen des zentralen Koppelfeldes verbunden ist und in denen die Anschlußgruppen jeweils zu zweit einander paarweise zugeordnet sind, und in denen innerhalb jeder derselben zum außenseitigen Anschluß von Teilnehmer-und/oder Verbindungs-Leitungen dienende und innerhalb der jeweiligen Anschlußgruppe primär mit ihrem Teilkoppelfeld verbundene Anschlußeinheiten, z.B. Teilnehmeranschlußschaltungen, Mehrfachteilnehmeranschlußschaltungen, Verbindungsleitungs(-mehrfach-)abschlußschaltungen und dergleichen, in einer Weise umschaltbar sind, durch die die Anschlußeinheiten jeweils einer ersten dieser beiden Anschlußgruppen zusätzlich an das Teilkoppelfeld der jeweils anderen, also einer jeweils zweiten Anschlußgruppe angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird.

In einer Schaltungsanordnung dieser Art besteht das Problem, daß in Zeitpunkt der Umschaltung in der Regel bereits eine größere Anzahl von Verbindungen besteht, d.h. Verbindungen die bereits von Teilnehmerstelle zu Teilnehmerstelle vollständig durchgeschaltet sind, und daß diese Verbindungen unterbrochen werden. Diese ist sowohl für die betreffenden Teilnehmer sehr störend, als auch für die betreffenden Vermittlungsstellen sehr arbeitsaufwendig, weil die abgebrochenen Verbindungen alle neu aufgebaut werden müssen. Der störende Effekt für die betreffenden Teilnehmer besteht nicht nur darin, daß laufende Telefongespräche unvorhersehbar und abrupt unterbrochen werden, sondern auch darin, daß von einer solchen Unterbrechung auch Verbindungen betroffen werden können, die zu Datenübertragungszwecken, Steuerungszwecken, Überwachungszwecken und dgl. aufgebaut sein können. Ein anschließender Wiederaufbau jeder der abgebrochenen Verbindungen bedeutet für die betreffenden Vermittlungsanlagen, insbesondere für zentralgesteuerte Vermittlungsanlagen, daß die betreffenden informationsverarbeitenden sowie die die Verbindungsdurchschaltungen steuernden zentralen und teilzentralen Schalteinrichtungen einer stoßartigen Überbelastung ausgesetzt werden.

Für die Erfindung besteht die Aufgabe, in einer Schaltungsanordnung der zuletzt angegebenen Art Vorkehrungen dafür zu treffen, daß im Zusammenhang mit einer erforderlich werdenden Umschaltung - aus welchem Grunde eine solche auch immer erforderlich werden mag - bestehende Verbindungen nicht zu unterbrechen und einen Wiederaufbau derselben nebst den aufgezeigten negativen Auswirkungen, die ja nicht nur in der betreffenden einzelnen Vermittlungsstelle, sondern auch in sämtlichen anderen von den betreffenden abgebrochenen Verbindungen tangierten Vermittlungsstellen auftreten, in Zusammenhang einer solchen Umschaltung nicht erforderlich werden zu lassen.

Die Erfindung löst die gestellte Aufgabe dadurch, daß jedem dezentralen Steuerwerk ein Verbindungsdatenspeicher zugeordnet ist, in welchem pro durchgeschaltete Verbindung Verbindungsdaten darüber gespeichert sind, welcher außenseitige Teilkoppelfeldanschluß jeweils mit seinesgleichen innerhalb derselben Anschlußgruppe oder in einer weiteren Anschlußgruppe verbunden ist, daß aufgrund eines für jeweils ein Paar von Anschlußgruppen und darin für jeweils eine Anschlußgruppe gegebenen Umschaltevorbereitungskennzeichens sowohl die betreffenden beiden dezentralen Steuereinrichtungen gegenüber neuen Verbindungsherstellungsaufträgen gesperrt werden, insbesondere, daß auch noch im Aufbau befindliche Verbindungen gesperrt werden, als auch die dezentrale Steuereinrichtung der ersten Anschlußgruppe die in ihrem Verbindungsspeicher gespeicherten Verbindungsdaten an die denzentrale Steuereinrichtung der zweiten Anschlußgruppe überträgt, und daß diese anhand dieser Verbindungsdaten, die vorzugsweise in dem Verbindungsspeicher der zweiten Anschlußgruppe zwischengespeichert werden, Teilverbindungen über das betreffende Teilkoppelfeld, das Zentralkoppelfeld und dasselbe oder ein weiteres Teilkoppelfeld herstellt, wobei diese Teilverbindungen von solchen außenseitigen Teilkoppelfeldanschlüssen ausgehen, mit denen durch die Umschaltung die Anschlußeinheiten der ersten Anschlußgruppe verbindbar sind.

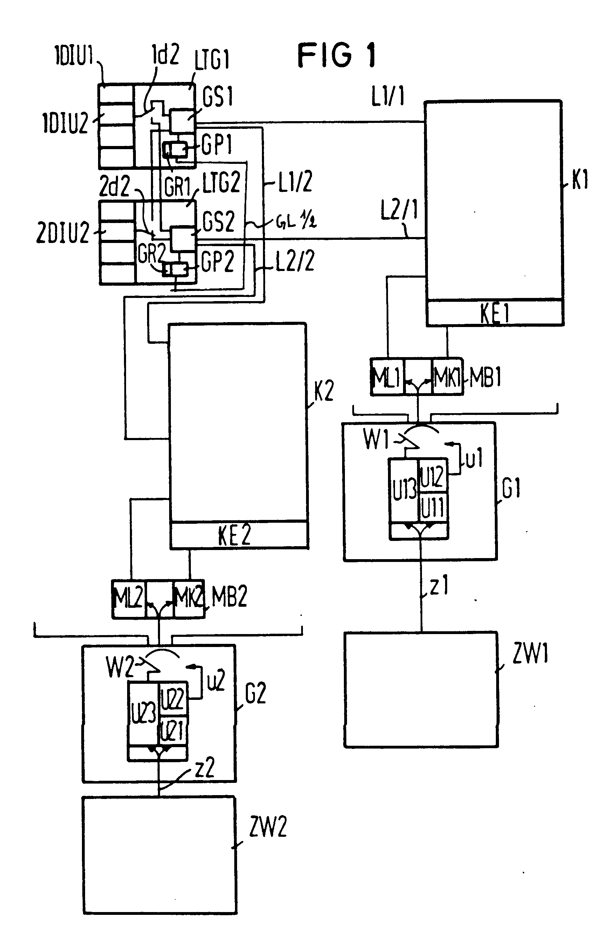

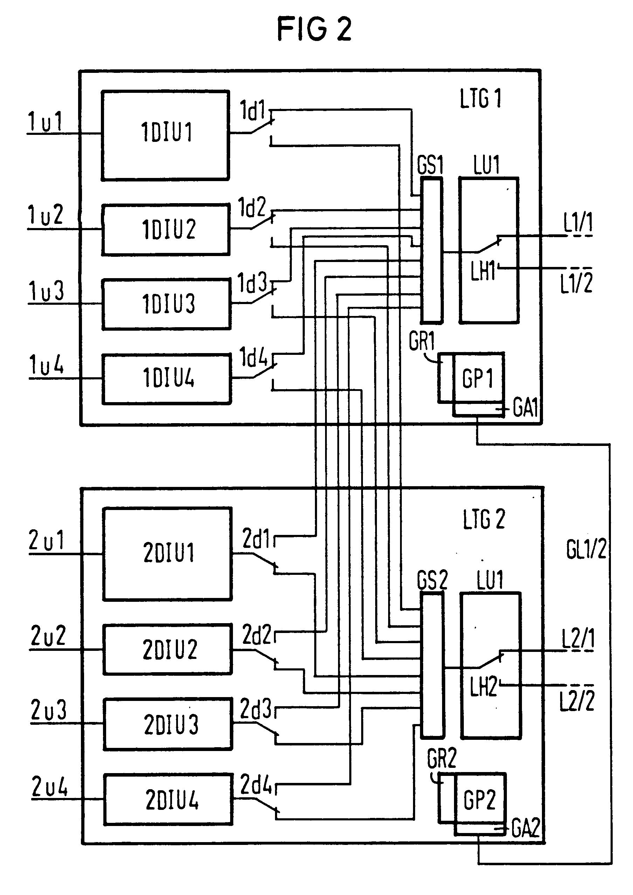

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift 3 128 365 (VPA 81 P 6257) beschrieben ist. Figur 2 zeigt weitere erfindungswesentliche Details.

Bevor die Beschreibung speziell auf die erfindungswesentlichen Besonderheiten des Ausführungsbeispieles eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten Zeitschrift "telcom report". Hierin sind unter anderem auf Seite 19 ff periphere Anschlußgruppen in diesem Fernsprechvermittlungssystem beschrieben. Wie es ähnlich auch in Bild 1 auf seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1 L2/1, L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfelder K1/K2 je ein zentraler Prozessor ZW1 bzw. ZW2 vorgesehen, mit dessen Hilfe die gesamten Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen im dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 die Rede.

Den vom zentralen Prozessor ZW1 an die genannten Anschlußgruppen zu übertragenden Informationen, die auch Abrufbefehle zum Abruf von den Anschlußgruppen bzw. von den Anschlußeinheiten zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit von zentralen Prozessor ZW1 anzusteuern zwecks Übertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungn, zum Beispiel GP1, GP2, andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen. Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U1/U2 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronischen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtung zugeordneten Zeitmultiplex-Verbindungsleitungen dienenden Anschlußgruppen vorgesehen, von denen die beiden Anschlußgruppe LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist im einzelnen beschrieben, welchem Zweck die genannten Anschlußeinheiten dienen. Eine Anschlußeinheit ist bei Analog-Teilnehmerleitungen bzw. Analog-Verbindungsleitungen jeweils für eine Mehrzahl von Leitungen vorgesehen. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme), von denen jedes einer anderen Verkehrsrichtung zugeordnet sein kann, die aber auch zu zweit oder zu mehreren jeweils gemeinsam ein und derselben Verkehrsrichtung zugeordnet sein können) insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß die dezentralen Steuereinrichtungen (GP), Teilkoppelfelder (GS) oder Zeitmultiplex-Leitungen störungsbedingt ausfallen können, was also auch für die Zeitmultiplex-Leitungen L1/1, L1/2, L2/1 und L2/2 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur eine einziges Übertragungssystem pro Verkehrsrichtung vorgesehen zu werden braucht, würde bei Ausfall einer dezentralen Steuereinrichtung, eines Teilkoppelfeldes oder der eine Anschlußgruppe mit dem zentralen Koppelfeld verbindenden Zeitmultiplex-Leitung auch das betreffende einzige Übertragungssystem pro Verkehrsrichtung ausfallen. Gleiches gilt bei Ausfall der dezentralen Steuereinrichtung zum Beispiel GP1, einer Anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 und 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anchlußgruppe LTG1 bzw. LTG2 verbunden sind, im Notbetrieb einer dieser beiden Anschlußgruppen, zum Beispiel LTG2, zu der ein Teilkoppelfeld bildenden Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprehenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation störungsbedingt aus ihrer dargestellten Ruhelage in ihre Arbeitslage umgeschaltet, so sind von diesem Zeitpunkt an die Anschlußeinheiten, 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbtriebs-Adressen dieser Anschlußeinheiten gesperrt werden. Auf nicht im einzelnen dargestellte Weise wird also dem Zentralen Prozessor gemeldet, daß eine Anschlußgruppe, z.B. LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsynchron laufen, zu der hin die jeweilige Umschaltung erfolgt ist. In der gleichen Weise kann auch die Versorgung mit den erforderlichen Betriebsspannungen für der betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, das heißt ausfallsicher auszuführen, zum Beispiel zweifach für alle Anschlußeinheiten der beiden Anschlußgruppen.

Teilweise abweichend von dem zuvor Beschriebenen kann auch vorgesehen sein, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt. Dies wurde bereits erwähnt. Mit Hilfe desersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgruppe erfolgt in der angegebenen Weise dadurch, daß anhand des ersten Adressenteils eine Einstellinformation im Adressen-Signal-Umsetzer U11/U12 gebildet wird, die über den Steuerweg u1 dem elektronischen Wähler W1 zugeführt wird, wodurch die Eingabe-Ausgabe-Einrichtung G1 über die Puffereinrichtung MB1 mit demjenigen über das Koppelfeld K1 im durchgeschalteten Zustand bereitgehaltenen Signalkanal verbunden wird, der über eine Zeitmultiplexleitung, zum Beispiel L1/1 zu der betreffenden Anschlußgruppe hin führt. Es ist also ein Adressen-Signalkanal-Umsetzer G1 im zentralen Prozessor vorgesehen, der bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt. Diese Signalkanalnummer bezeichnet also den zuvor genannten betreffenden Signalkanal. Diese Signalkanalnummer dient als Einstellinformation, die über den Signalweg u1 zu dem genannten elektronischen Wähler W1 hin zu dessen Einstellung auf den betreffenden Signalkanal weitergegeben wird. Dieser elektronsiche Wähler kann in jeder beliebigen Weise auch als Koppler ausgebildet sein. Der Adressen-Signalkanal-Umsetzer G1 im zentralen Prozessor ZW1 kann selbstverständlich auch räumlich gesondert von diesem (wie in Figur 1 dargestellt) vorgesehen sein, kann aber auch Bestandteil desselben sein. Er dient im übrigen in an sich bekannter Weise der Abwicklung der Eingabeprozeduren und Ausgabeprozeduren des zentralen Prozessors ZW1.

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, zum Beispiel GS1, zunächst zu der betreffenden dezentralen Steuereinrichtung, zum Beispiel GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, zum Beispiel LTG1, diejenige ist, zu welcher hin die betreffende Information weiterzuleiten ist. Es sei angenommen, daß dies die Anschlußeinheit 1DIU2 sei. Weiterhin sie angenommen, daß sich die betreffende Anschlußgruppe, zum Beispiel LTG1 im Normalbetriebszustand befindet. Im diesem Falle ist also der Umschalter 1d2 in der in Figur 1 dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten ist. Aufgrund dessen steuert die dezentrale Steuereinrichtung GP1 die Zeitmultiplex-Koppeleinrichtung GS1, so daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber, und daß sie anhand derselben einen direkten Übertragungsweg für die Information von dem über die Zeitmultiplex-Leitung L1/1 verlaufenden Signalkanal über die Zeitmultiplex-Koppeleinrichtung GS1 und die Ruheseite des Umschalters 1d2 zur Anschlußeinrichtung 1DIU2 durchschaltet. In diesem Falle wird also die Adresse über den Signalkanal in der dezentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtung GP1 entfallen.

In diesem Zusammenhang ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift 3 106 903 im einzelnen beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in ihre Arbeitslage umgelegt. Diese kann auf zweierlei Weise erfolgen. Es kann vorgesehen sein, daß die aufgetretene Betriebsstörung innerhalb der von ihr betroffenen Anschlußgruppe selber erkannt wird. Dies kann dadurch geschehen, daß der der ständigen Überprüfung der vollen Funktionsfähigkeit jeder der Anschlußgruppen dienende Datenaustausch mit dem zentralen Prozessor gemäß der zuletzt genannten deutschen Offenlegungsschrift nicht mehr stattfindet, und daß dies innerhalb der betreffenden Anschlußgruppe erkannt wird. Aufgrund dessen kann die erwähnte Betätigung der Umschalter 2d1 bis 2d4 innerhalb der betreffenden Anschlußgruppe durch ihre dezentrale Steuereinrichtung, zum Beispiel GP2 selber vorgenommen werden. Jedoch kann auch vorgesehen sein, daß der zentrale Prozessor ZW1 die die Anschlußgruppe LTG2 betreffende Betriebsstörung erkennt, und daß er eine entsprechende Information hierüber an die dezentrale Steuereinrichtung GP1 der paarweise zugeordneten Anschlußgruppe LTG1 überträgt, und daß diese dann einen Befehl zu Betätigung der genannten vier Umschalter in der Anschlußgruppe LTG2 an diese überträgt.

Im Zustand der die Anschlußgruppe LTG2 betreffenden Betriebsstörung sind also die Umschalter 2d1 bis 2d4 betätigt. Dementsprechend sind die Anschlußeinheiten 2DIU1 bis 2DIU4 mit der Zeitmultiplex-Koppeleinrichtung GS1 der Anschlußgruppe LTG1 verbunden.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 21DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronischen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronischen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebes der Anschlußgruppe LTG2 ab. Im Adressen-signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuereinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit, für die die Information bestimmt ist. Aufgund des ersten Adressenteils und aufgrund des zweiten Adressenteils leitet die dezentrale Steuereinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, zum Beispiel 2d2. Auch in diesem Falle kann die betreffende Information in der dezentralen Steuereinrichtung GP1 zwischengespeichert werden und dann von ihr aus zu der betreffenden Anschlußeinheit, zum Beispiel 2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die zuvor beschriebene Weise können sowohl Informationen vom zentralen Prozessor zu jeder der Anschlußeinheiten, als auch in umgekehrter Richtung übertragen werden. Im letterem Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3 128 365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW1 nicht selber aufgenommen werden müssen, sondern nach Ankunft von einer Anschlußeinheit in der Eingabe-Ausgabe-Einrichtung G1 von hier aus direkt zu der betreffenden Anschlußeinrichtung übertragen werden, für die sie bestimmt sind. Dies ist möglich durch die in der zuletzt angegebenen Patentschrift beschriebene Weiterleitung der Informationen innerhalb der Eingabe-Ausgabe-Einrichtung G1.

Wie bereits aus dem bisherigen Teil der Beschreibung hervorgeht, ist ein der Verbindungsdurchschaltung dienendes zentrales Koppelfeld K1/K2 zweifach vorgesehen. Ebenso zweifach ist ein zentraler Prozessor ZW1/ZW2 vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozessor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Dopplung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist -, daß eine Mehrzahl von dezentralen Anschlußgruppen mit je einem Teilkoppelfeld zum außenseitigen Anschluß von Verbindugns- und/oder Teilnehmerleitungen, bzw. entsprechenden Kanälen, und mit einer dezentralen programmierbaren Steuereinrichtung zur Schaltkennzeichenaufnahme von diesen Leitungen, zur Schaltkennzeichenverarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 angeschlossen, die zu den beiden zentralen Koppelfeldern K1 und K2 führen. Jede dieser Zeitmultiplexleitungen umfaßt - wie bereits ebenfalls weiter oben erläutert wurde - eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist -, daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betriebsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilaufgebaute Verbindungswege eintreffende Schaltkennzeichen, die über die dezentralen Anschlußgruppen eintreffen, dem jeweiligen zentralen Prozessor nach einer Vorverarbeitung der jeweiligen dezentralen Steuereinrichtung zugeführt werden, wodurch dieser Einstellinformationen für sein zentrales Koppelfeld sowie Schaltkennzeichen und Steuerinformationen erarbeitet, die zur Aussendung über die betreffenden Verbindungen dem jeweiligen dezentralen Steuerwerk wieder zugeleitet werden und hier zur Aussendung kommen und/oder zur Anschaltung von Hörtonsignalen, Rufsignalen und dergleichen für die betreffenden Teilnehmer führen. Der für diese Schaltkennzeichenbehandlung dienende Datenaustausch zwischen jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, sofern das Koppelfeld K1 und der zentrale Prozesor ZW1 sich zur Zeit in Betrieb befindet.

Die genannten Datenverbindungen zwischen jeder der dezentralen Steuereinrichtungen jeder der Anschlußgruppen einerseits und dem jeweils in Betrieb befindlichen zentralen Prozessor dienen nicht nur für den genannten, zur Abwicklung der erwähnten Schaltkennzeichenbehandlung durchgeführten Datenaustausch, sondern diese Datenverbindungen dienen auch dazu, daß beim Inbetriebgehen eines zentralen Prozessors und des ihm zugeordneten zentralen Koppelfeldes, dieser zentrale Prozessor Programm- und Vermittlungs-Software an sämtliche dezentralen Steuereinrichtungen sämtlicher Anschlußgruppen überträgt. Diese wird auch als "Laden" bezeichnet und ist in großer Ausführlichkeit in der bereits genannten Zeitschrift "telcom report", Beiheft 1981, insbesondere Seite 19 ff beschrieben. Hierzu ist im Falle des vorliegenden beschriebenen Ausführungsbeispiels eine mit dem zentralen Prozessor, zum Beispiel ZW1, verbundene Eingabe-Ausgabe-Einrichtung, zum Beispiel G1, vorgesehen, an die mehrere Daten-Pufferspeichereinrichtungen, zum Beispiel MB1, angeschlossen sind; von jeder derselben führt eine Mehrzahl von Datenverbindungen über das betreffende Koppelfeld, zum Beispiel K1, zu den dezentralen Steuereinrichtungen der genannten Anschlußgruppen. Diese Daten-Pufferspeicher sind mit Link-Anschlüssen einzeln wie die Link-Leitungen mit Anschlüssen des Koppelfeldes fest verbunden. Wie bereits ausgeführt wurde, ist eine Link-Leitung und dementsprechend auch ein Link-Anschluß jeweils durch ein Kanalpaar realisiert. Die Kanalpaare gehören zu den an das Koppelfeld K1bzw. K2 angeschlossenen Zeitmultiplexleitungen.

Die für den Vermittlungsbetrieb erforderlichen und in den dezentralen Steuereinrichtungen zu speichernden vermittlungstechnischen Informationen, wie zum Beispiel Teilnehmeranschlußlage-Teilnehmerrufnummer-Zuordnungen, Teilnehmerberechtigungen und technischen Merkmale von angeschlossenen Verbindungsleitungen und dergleichen, sowie Programminformationen, die für die Abwicklung der vermittlungstechnischen Funktionen maßgebend sind, werden zunächst entsprechenden Speichern der beiden zentralen Prozessoren eingegeben und werden von hier aus beim Inbetriebgehen eines zentralen Prozessors zu den dezentralen Steuereinrichtungen der verschiedenen Anschlußgruppen übertragen und hier gespeichert. Diese Übertragung und Speicherung erfolgt pro Anschlußgruppe einzeln, das heißt für die dezentralen Steuereinrichtungen der verschiedenen Anschlußgruppen einzeln nacheinander. Der hierfür erforderliche Zeitaufwand bei Einschaltung einer Vermittlungsstelle ist im Vergleich zu den in Zusammenhang mit der Einrichtung einer Vermittlungsstelle erforderlichen gesamten Arbeiten verschwindend gering. Stärker fällt dieser Zeitaufwand jedoch ins Gewicht im Falle einer Ersatzschaltung des zentralen Prozessors und des zentralen Koppelfeldes. Für diesen Fall ist ebenso vorgesehen, die dezentralen Steuereinrichtungen der Anschlußgruppen mit den im zentralen Prozessor gespeicherten vermittlungstechnischen Informationen und Programminformationen zu laden, um mit Sicherheit einen völligen Gleichlaut zwischen diesen Informationen, die also einerseits im neu in Betrieb gehenden zentralen Prozessor und andererseits in den dezentralen Steuereinrichtungen gespeichert sind, zu gewährleisten. Hierdurch werden jegliche Abweichungen ausgeschlossen, die sonst entstehen könnten, bezüglich dieser vermittlungstechnischen Informationen und dieser Programminformationen, die also einerseits im in Betrieb gehenden zentralen Prozessor und andererseits in den dezentralen Steuereinrichtungen jeder der verschiedenen Anschlußgruppen gespeichert sind. Solche Abweichungen könnten zum Beispiel dadurch entstehen, daß zwischenzeitlich Änderungen an diesen vermittlungstechnischen Informationen und/oder Programminformationen vorgenommen werden, oder auch dadurch, daß in den dezentralen Steuereinrichtungen diese Informationen durch irgendwelche Störeinflüsse verfälscht worden sind. Solche Abweichungen werden aber mit Sicherheit ausgeschlossen durch ein erneutes Laden sämtlicher dezentraler Steuereinrichtungen mit den Programminformationen und den vermittlungstechnischen Informationen seitens des in Zusammenhang mit der vorgesehenen Ersatzschaltung neu in Betrieb gehenden zentralen Prozessors.

Nachdem die Beschriebung des in den Zeichnungen auszugsweise dargestellen Ausführungsbeispiels der Erfindung eine Zeitmultiplex-Fernsprechvermittlungsanlage, in der die Erfindung angewendet ist, in allgemeineren Zusammenhängen beschrieben hat, wendet sie sich nun den erfindungswesentlichen Zusammenhängen in besonderer Weise zu.

Wie weiter oben beschrieben wurde, wird der Vermittlungsbetrieb mit Hilfe eines der zentralen Prozessoren ZW1 oder ZW2 und mit Hilfe eines der Zentralkoppelfelder K1 bzw. K2 abgewickelt. Dementsprechend sind auch die Anschlußgruppen über Zeitmultiplex-Anschlußleitungen L1/1 und L2/1 mit dem Zentralkoppelfeld K1 verbunden, und es arbeiten die dezentralen Steuereinrichtungen GP1 und GP2 mit dem zentralen Prozessor ZW1 oder mit dem zentralen Prozessor ZW2 in der beschriebenen Weise zusammen. Entsprechendes gilt für sämtliche anderen Anschlußgruppen gleicher Weise. Mit Hilfe von symbolisch angedeuteten Umschaltern LH1 und LH2 in Fig. 2 wird eine entsprechende Umschaltung bewerkstelligt, wodurch die zuvor erwähnte Verbindung der Anschlußgruppen entweder mit dem Zentralkoppelfeld K1 und dem entsprechenden zentralen Prozessor ZW1 oder mit dem anderen zentralen Koppelfeld K2 und dem anderen zentralen Prozessor ZW2 erreicht wird. Die Umschalter LH1 und LH2 sind also so dargestellt, wie es einer Zusammenarbeit der Anschlußgruppe mit dem Zentralkoppelfeld K1 und dem zentralen Prozessor ZW1 entspricht. Diese Umschalter LH1 und LH2 befinden sich in Zeitmultiplex- Abschlußschaltungen, deren Bedeutung und Arbeitsweise bereits in der weiter oben genannten Zeitschrift "telcom report" (Beiheft 1981) auf Seite 19 ff beschrieben ist. Diese Zeitmultiplex- Abschlußschaltungen sind in Bild 1 auf Seite 21 dieser Zeitschrift mit "LIU" bezeichnet und mit "Linkschnittstelle" benannt.

Wie aus den Zeichnungen Figuren 1 und 2 zu entnehmen ist, ist außerdem jedem dezentralen Steuerwerk GP1 und GP2 je ein Verbindungsdatenspeicher (GR1, GR2) zugeordnet. In diesem sind pro durchgeschaltete Verbindung Verbindungsdaten gespeichert. Sie geben pro Verbindung an, welcher außenseitige Teilkoppelfeldanschluß (in Fig. 2 jeweils linksseitig an den Teilkoppelfeldern GS1 und GS2 dargestellt) jeweils mit seinesgleichen verbunden ist. Da es sich im vorliegenden Falle um eine Zeitmultiplex-Fernsprechvermittlungsanlagehandelt, sind diese außenseitigen Teilkoppelfeldanschlüsse durch ihre Raumlage und durch ihre Zeitlage in an sich bekannter Weise bestimmt (Raumlage-Zeitlage-Vielfach). Die gespeicherten Verbindungsdaten pro Verbindung geben also an, welcher außenseitig an dem Teilkoppelfeld an einer Anschlußgruppe liegende verbindungsindividuell belegbare Verbindungsweg mit welchem anderen seinesgleichen verbunden ist. Dieser andere seinesgleichen kann innerhalb der selben Anschlußgruppe oder in einer anderen Anschlußgruppe liegen. Die Verbindungsdaten geben im Einzelnen die im Raumlage-Zeitlage-Vielfach liegende Anschlußlage an.

In der zuvor angegebenen Weise sind also pro Verbindung die wesentlichen Verbindungsdaten darüber gespeichert, welcher verbindungsindividuelle Anschluß an der beschriebenen Fernsprechvermittlungsanlage mit welchem anderen Anschluß verbunden ist. Hierzu zählen alle verbindungsindividuellen Verbindungswege (Teilnehmerleitungen, Verbindungsleitungen, sowie diesen entsprechende verbindungsindividuelle Kanäle). Dies gilt für sämtliche Anschlußgruppen.

Wie weiter oben bereits ebenfalls ausführlich erläutert wurde, besteht bei der hier beschriebenen Zeitmultiplex-Fernsprechvermittlungsanlage die Möglichkeit, daß innerhalb eines Paares von Anschlußgruppen, z. B. LTG1 und LIG2, die Anschlußeinrichtungen 1DIU1 bis 1DIU4 einer ersten Anschlußgruppe, z.B. LTG1, die bei Normalbetrieb über die Ruheseiten der Umschalter, z. B. 1d1 bis 1d4, mit dem eigenen Teilkoppelfeld, z. B. GS1, verbunden sind, mit Hilfe dieser Umschalter umgeschaltet werden können zum Teilkoppelfeld, z. B. GS2, der jeweiligen Partner-Anschlußgruppe, z. B. LTG2. Entsprechendes gilt umgekehrt für die Anschlußeinrichtungen 2DIU1 bis 2DIU4, die mit Hilfe der Umschalter 2d1 bis 2d4 vom Teilkoppelfeld GS2 derselben Anschlußgruppe LTG2 zum Teilkoppelfeld GS1 der Anschlußgruppe LTG1 umgeschaltet werden können.

Durch die Erfindung ist nun die Möglichkeit geschaffen, daß durchgeschaltete Verbindungen bei einem solchen Umschaltevorgang nicht unterbrochen werden müssen. Dies kann sich auf Verbindungen beziehen, die bereits von Teilnehmerstelle zu Teilnehmerstelle durchgeschaltet sind oder auch zusätzlich auf Verbindungen, die sich noch im Aufbaustadium befinden. Von besonderer Bedeutung ist aber eine unterbrechungsfreie Fortsetzung von Verbindungen, die bereits von Teilnehmer zu Teilnehmer durchgeschaltet sind und über die die jeweiligen beiden Teilnehmer bereits kommunizieren (Fernsprechen, Fernschreiben, Fernkopieren, Datenübertragen und dergleichen).

Im erfindungsgemäßen Zusammenhang ist nun weiterhin vorgesehen, daß dann, wenn in einer Anschlußgruppe eine Umschaltung in der zuvor erwähnten Weise vorgenommen werden soll, zunächst ein Umschaltevorbereitungskennzeichen an das betreffende Paar von Anschlußgruppen abgegeben wird und darin für jeweils eine Anschlußgruppe gegeben wird. Dieses Umschaltevorbereitungskennzeichen kann z. B. vom jeweiligen zentralen Prozessor abgegeben werden. Es gilt also jeweils einem Paar von Anschlußgruppen und betrifft darin jeweils eine der beiden Anschlußgruppen. Erfindungsgemäß ist nun vorgesehen, daß aufgrund eines für jeweils ein Paar von Anschlußgruppen und darin speziell für jeweils eine Anschlußgruppe gegebenen Umschaltevorbereitungskennzeichens zunächst die betreffenden beiden dezentralen Steuereinrichtungen gegenüber neuen Verbindungsherstellungsaufträgen gesperrt werden. Die se Sperrung ist hinsichtlich ihrer Auswirkung auf die betroffenen Teilnehmer praktisch nur von kurzzeitiger Auswirkung. Soweit diese Sperrung Verbindungsleitungen bzw. entsprechende Kanäle betrifft, die über die betreffenden beiden Anschlußgruppen führen, ist die in ihrer Auswirkung hierbei ebenfalls nur kurzzeitige Sperrung außerdem deshalb von untergeordneter Bedeutung, weil die betreffenden Verkehrsströme auf andere Wege ausweichen können. - In diesem Zusammenhang kann vorgesehen werden, daß bereits im Aufbau befindliche Verbindungen weiter aufgebaut werden, also nicht mit unter diese Sperrung fallen. Werden jedoch auch bereits teilweise aufgebaute Verbindungen ebenfalls dieser Sperrung unterworfen, so bedeutet das für den jeweils betreffenden rufenden Teilnehmer lediglich, daß sein derzeitiger Verbindungsherstellungsversuch nicht zum gewünschten Erfolg geführt hat, und daß er einen neuen Verbindungsherstellungsversuch beginnen muß. Von vorrangiger Bedeutung ist in diesem Zusammenhang, daß - wie bereits angegeben - bereits von Teilnehmerstelle zu Teilnehmerstelle durchgeschaltete Verbindungen, über die die betreffenden beiden Teilnehmer bereits kommunizieren, nicht unterbrochen werden.

Im hier beschriebenen erfindungsgemäßen Zusammenhang ist weiterhin vorgesehen, daß aufgrund eines für jeweils ein Paar von Anschlußgruppen und darin für jeweils eine Anschlußgruppe gegebenen Umschaltevorbereitungskennzeichens die dezentrale Steuereinrichtung derjenigen Anschlußgruppe, deren Anschlußeinheiten in der angegebenen Weise umgeschaltet werden sollen, die in dem Verbindungsspeicher dieser Anschlußgruppe gespeicherten Verbindungsdaten an die dezentrale Steuereinrichtung der anderen Anschlußgruppe überträgt. Diese Übertragung nehmen die dezentralen Steuereinrichtungen GP2 und GP1 vor, und zwar über einen dezentralen Datenübertragungsweg GL1/2, über den die beiden dezentralen Steuereinrichtungen GF1 und GP2 miteinander verbunden sind. Diese Verbindung besteht zwischen Sende- und Empfangseinrichtungen GA1 und GA2, die zu diesen dezentralen Steuereinrichtungen gehören. Diese Sende- und Empfangseinrichtungen dienen zur Abwicklung des unmittelbaren Datenaustausches zwischen den beiden dezentralen Steuereinrichtungen jeweils eines Paares von Anschlußgruppen. Aufgrund des Umschaltevorbereitungskennzeichens überträgt nun die dezentrale Steuereinrichtung GP2 sämtliche Verbindungsdaten aus dem Verbindungsdatenspeicher GR2 an die dezentrale Steuereinrichtung GP1. Zweckmäßigerweise speichert letztere die empfangenen Verbindungsdaten in ihrem Verbindungsdatenspeicher GR1. Diese Speicherung kann auch in einem anderen entsprechenden Speicher stattfinden.

Die dezentrale Steuereinrichtung GP1, die nun auf diese Weise die Verbindungsdaten derjenigen Verbindungen, die über die Anschlußeinheiten 2DIU1 bis 2DIU4 der Anschlußgruppe LTG2 verlaufenden durchgeschalteten Verbindungen erhalten hat, stellt nun anhand dieser Verbindungsdaten Teilverbindungen über das betreffende, d. h. ihr zugeordnete Teilkoppelfeld, das Zentralkoppelfeld und dasselbe Teilkoppelfeld oder ein anderes Teilkoppelfeld her, und zwar zu einem Teilkoppelfeldanschluß, der durch die jeweiligen Verbindungsdaten bezeichnet ist. Diese Teilverbindungen gehen jeweils von solchen außenseitigen Teilkoppelfeldanschlüssen des Teilkoppelfeldes GS1 aus, mit denen durch die Umschaltung die Anschlußeinheiten der Anschlußgruppe LTG2 verbindbar sind, und führen hin zu Teilkoppelfeldanschlüssen, die durch die betreffenden Verbindungsdaten bezeichnet sind und über die also die entsprechenden jeweils von Teilnehmerstelle zu Teilnehmerstelle durchgeschalteten bestehenden Verbindungen verlaufen. Dabei werden die betreffenden Teilverbindungen auf diese Verbindungen, denen sie einzeln entsprechen, gleichsam aufgeschaltet. Jede solche Teilverbindung, die in dieser Weise von einem außenseitigen Teilkoppelfeldanschluß des Teilkoppelfeldes GS1 ausgehend aufgebaut wird, entspricht also einer bestehenden Verbindung, die über eine der Anschlußeinheiten 2DIU1 bis 2DIU4 verläuft. Dabei geht jede Teilverbindung von einem außenseitigen Teilkoppelfeldanschluß am Teilkoppelfeld GS1 aus, der über die Umschalter 2d1 bis 2d4 jeweils demjenigen Verbindungsweg innerhalb der Anschlußeinheiten 2DIU1 bis 2DIU4 entspricht, der von der jeweils betreffenden durchgeschalteten Verbindung belegt ist. Hiernach ist also vorgesehen, daß jede Teilverbindung von einem Teilkoppelfeldanschluß ausgeht, der durch die Umschaltung mit derjenigen Anschlußeinheit verbindbar ist, über die jeweils die ursprüngliche Verbindung verläuft, die durch diese Teilverbindung zur Vermeidung einer Verbindungsunterbrechung im durchgeschalteten Zustand aufrechterhalten wird. Auf diese Weise wird die jeweils durchgeschaltete Verbindung beim Umschaltevorgang auf die für sie jeweils vorbereitete Teilverbindung umgelegt, und auf diese Weise können sämtliche Verbindungen ohne Unterbrechung übernommen werden.

Dadurch, daß die beiden Anschlußgruppen, bei denen eine Umschaltung der Anschlußeinheiten der einen der beiden Anschlußgruppen (LTG2) auf das Teilkoppelfeld (GS1) der anderen der beiden Anschlußgruppen (LTG1) vorgenommen wird, durch das Umschaltevorbereitungskennzeichen gegenüber neuen Verbindungsherstellungsaufträgen in der beschriebenen Weise gesperrt wird, haben deren dezentrale Steuereinrichtungen GP2 und GP1 in dieser Betriebssituation keine Verkehrsbelastung durch neue Verbindungsherstellungsaufträge, sondern sind gänzlich oder im wesentlichen hinsichtlich ihrer Arbeitsbelastung frei für die Abwicklung der Herstellung der genannten Teilverbindungen. - Diese Teilverbindungen werden mit der Durchführung der genannten Umschaltung zu vollständigen Verbindungen, indem sie in die entsprechenden, bereits durchgeschaltetgewesenen Verbindungen durch die Umschaltung einbezogen werden.

**Patentansprüche**

1.   Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld (K1, K2) samt einem unter anderem dessen Steuerung sowie einer hierfür erforderlichen Schaltkennzeichenverarbeitung dienenden zentralen Prozessor (ZW1, ZW2) vorgesehen ist, und in denen eine Mehrzahl von dezentralen Anschlußgruppen (LTG) mit je einem Teilkoppelfeld (GS) zum außenseitigen Anschluß von Verbindungs- und/oder Teilnehmerleitungen und mit je einer dezentralen Steuereinrichtung (GP) zur Schaltkennzeichenaufnahme von diesen Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen in diesen Anschlußgruppen (LTG) Teilkoppelfelder (GS) innenseitig über Gruppen von Linkleitungen (L1, L2) gruppenweise getrennt mit Koppelfeldanschlüssen des zentralen Koppelfeldes (K) verbunden ist und in denen die Anschlußgruppen jeweils zu zweit einander paarweise zugeordnet sind, und in denen innerhalb jeder derselben zum außenseitigen Anschluß von Teilnehmer-und/oder Verbindungs-Leitungen dienende und innerhalb der jeweiligen Anschlußgruppe (LTG) primär mit ihrem Teilkoppelfeld verbundene Anschlußeinheiten (DIU), z.B. Teilnehmeranschlußschaltungen, Mehrfachteilnehmeranschlußschaltungen, Verbindungsleitungs(-mehrfach-)abschlußschaltungen und dergleichen, in einer Weise umschaltbar sind, durch die die Anschlußeinheiten (DIU) jeweils einer ersten dieser beiden Anschlußgruppen (LTG) zusätzlich an das Teilkoppelfeld der jeweils anderen, also einer jeweils zweiten Anschlußgruppe angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird,

**dadurch gekennzeichnet,** daß jeder dezentralen Steuereinrichtung (GP) ein Verbindungsdatenspeicher (GR) zugeordnet ist, in welchem pro durchgeschaltete Verbindung Verbindungsdaten darüber gespeichert sind, welcher außenseitige Teilkoppelfeldanschluß jeweils mit seinesgleichen innerhalb derselben Anschlußgruppe (LTG) oder in einer weiteren Anschlußgruppe verbunden ist, daß aufgrund eines für jeweils ein Paar von Anschlußgruppen und darin für jeweils eine Anschlußgruppe gegebenen Umschaltevorbereitungskennzeichens sowohl die betreffenden beiden dezentralen Steuereinrichtungen (GP) gegenüber neuen Verbindungsherstellungsaufträgen gesperrt werden, insbesondere, daß auch noch im Aufbau befindliche Verbindungen gesperrt werden, als auch die dezentrale Steuereinrichtung der ersten Anschlußgruppe (LTG) die in ihrem verbindungsspeicher (GR) gespeicherten Verbindungsdaten an die dezentrale Steuereinrichtung (GP) der zweiten Anschlußgruppe überträgt, und daß diese anhand dieser Verbindungsdaten, die vorzugsweise in dem Verbindungsspeicher der zweiten Anschlußgruppe zwischengespeichert werden, Teilverbindungen über das betreffende Teilkoppelfeld (GS), das Zentralkoppelfeld (K) und dasselbe oder ein weiteres Teilkoppelfeld herstellt, wobei diese Teilverbindungen von solchen außenseitigen Teilkoppelfeldanschlüssen ausgehen, mit denen durch die Umschaltung die Anschlußeinheiten der ersten Anschlußgruppe verbindbar sind.

2. Schaltungsanordnung nach Anspruch 1,
**dadurch gekennzeichnet,**
daß jede Teilverbindung von einem Teilkoppelfeldanschluß ausgeht, der durch die Umschaltung mit derjenigen Anschlußeinheit verbindbar ist, über die jeweils die ursprüngliche Verbindung verläuft, die durch diese Teilverbindung zur Vermeidung einer Verbindungsunterbrechung im durchgeschalteten Zustand aufrechterhalten wird.

**Claims**

1. Circuit arrangement for centrally controlled telecommunication exchanges, especially PCM time-division multiplex telephone exchanges, in which a central switching network (K1, K2), used for switching through connections, and a central processor (ZW1, ZW2), used interalia for controlling the switching network and for the necessary switching signal processing is provided, and in which exchanges a plurality of decentralised line trunk groups (LTG) is equipped with one group switch (GS) each for the outside connection of connecting and/or subscriber lines and with one decentralised group processor (GP) each for accepting switching signals from these lines, for preprocessing switching signals and for forwarding switching signals to the central processor and for sending out switching signals on these lines, and in which exchanges group switches (GS) are connected on the inside via groups of links (L1, L2) group-by-group separately to switching network connections of the central switching network (K) in these line trunk groups (LTG) and in which exchanges the line trunk groups are in each case allocated to one another two-by-two in pairs and in which, within each one of these, interface units (DIU) used for the outside connection of subscriber and/or connecting lines and primarily connected to their group switch within the respective line trunk group (LTG), for example subscriber line circuits, multiple subscriber line circuits, connecting line multiple terminating circuits and the like, can be switched in such a manner that the interface units (DIU) of in each case a first one of these two line trunk groups (LTG) are additionally connected to the group switch of the other one in each case, that is to say to a second line trunk group in each case, whereupon the corresponding switching signal processing and group switch setting for the connections to be switched through via the switched-over interface units is also carried out by the decentralised group processor of the other, that is to say second line trunk group, characterised in that to each decentralised group processor (GP), a connection data memory (GR) is allocated in which connection data on which outside group switch connection is in each case connected to its like within the same line trunk group (LTG) or in another line trunk group are stored for each switched-through connection, in that, due to a switch-over preparation signal given for in each case one pair of line trunk groups and within this pair for in each case one line trunk group, both the relevant two decentralised group processors (GP) are blocked with regard to new connection set-up orders, especially in that connections also still being set up are blocked, and the decentralised group processor of the first line trunk group (LTG) transfers the connection data stored in its connection memory (GR) to the decentralised group processor (GP) of the second line trunk group, and in that the latter, by means of these connection data which are preferably buffer-stored in the connection memory of the second line trunk group, establishes part-connections via the relevant group switch (GS), the central switching network (K) and the same or another group switch, these part-connections coming from those outside group switch connections by means of which the interface units of the first line trunk group can be connected by means of the switching-over.

2. Circuit arrangement according to Claim 1, characterised in that each part-connection comes from a group switch connection which can be connected by means of the switching-over to the interface unit via which extends in each case the original connection which is maintained by means of this part-connection in order to prevent an interruption of the connection in the switched-through state.

## Revendications

1. Montage pour des installations de commutation de télécommunications, notamment des installations de commutation téléphonique à multiplexage temporel MIC, à commande centrale, dans lesquelles il est prévu un champ de couplage central (K1,K2), utilisé pour l'interconnexion de liaisons, ainsi qu'un processeur central (ZW1,ZW2) utilisé notamment pour la commande de ce champ de couplage ainsi que pour un traitement d'indicatifs de commutation, nécessaire à cet effet, et dans lesquelles une multiplicité de modules de raccordement décentralisés (LTG) sont équipés respectivement d'un champ de couplage partiel (GS) pour le raccordement, côté extérieur, de lignes de jonction et/ou de lignes d'abonnés, et respectivement d'un dispositif de commande décentralisé (GP) servant à recevoir des indicatifs de commutation de la part de ces lignes, pour réaliser le prétraitement des indicatifs de commutation ainsi que pour la retransmission des indicatifs de commutation au processeur central et pour l'émission d'indicatifs de commutation dans ces lignes, et dans lesquelles, dans ces modules de raccordement (LTG), des champs de couplage partiels (GS) sont raccordés, côté intérieur, par l'intermédiaire de modules de lignes de raccordement (L1,L2), d'une manière séparée selon des modules, à des bornes du champ de couplage central (K) et dans lesquelles des modules de raccordement sont associés entre eux respectivement par couples, et dans lesquelles à l'intérieur de chacun de ces modules de raccordement, des unités de raccordement (DIU) utilisées pour le raccordement, côté extérieur, de lignes d'abonnés et/ou de lignes de jonction et sont raccordés sur le côté primaire à leur champ de couplage partiel à l'intérieur de chaque module de raccordement (LTG), par exemple des circuits de raccordement d'abonnés, des circuits de raccordement d'abonnés multiples, des circuits de terminaison (multiples) de lignes de jonction et analogue, peuvent être commutés de telle manière que les unités de raccordement (DIU) respectivement d'un premier de ces deux modules de raccordement (LTG) sont raccordées en supplément au champ de couplage partiel de l'autre module de raccordement respectif, c'est-à-dire un second module de raccordement respectif, à la suite de quoi, pour les liaisons devant être interconnectées par l'intermédiaire des unités de raccordement commutées, le traitement correspondant des indicatifs de commutation ainsi que le réglage des champs de couplage partiels sont également exécutés par le dispositif décentralisé de commande de l'autre module de raccordement, c'est-à-dire du second module de raccordement,

caractérisé par le fait qu'à chaque dispositif décentralisé de commande (GP) est associée une mémoire de données de liaison (GR), dans laquelle sont mémorisés, pour chaque liaison interconnectée, des données de liaison indiquant quelle borne, côté extérieur, du champ de couplage partiel est raccordée respectivement à son pendant à l'intérieur du même module de raccordement (LTG) ou dans un autre module de raccordement, que sur la base d'un indicatif de préparation de commutation délivré respectivement pour un couple de modules et, à l'intérieur de ces derniers, pour respectivement un module de raccordement, les deux dispositifs décentralisés de commande considérés (CP) sont bloqués vis-à-vis de nouveaux ordres d'établissement de liaisons, notamment par le fait qu'également des liaisons encore en cours d'établissement sont bloquées, et également le dispositif décentralisé de commande du premier module de raccordement (LTG) transmet les données de liaison mémorisées dans sa mémoire de données de liaisons (GR), au dispositif décentralisé de commande (GP) du second module de raccordement, et que sur la base de ces données de liaison, qui sont de préférence mémorisées temporairement dans la mémoire de liaisons du second module de raccordement, ce dernier établit des liaisons partielles par l'intermédiaire du champ de couplage partiel (GS) considéré, du champ de couplage central (K) et du même champ de couplage partiel ou d'un autre champ de couplage partiel, ces liaisons partielles partant de bornes du champ de couplage partiel, qui sont situées sur le côté extérieur et à l'aide desquelles les unités de raccordement du premier module de raccordement peuvent être raccordées sous l'effet de la commutation.

2. Montage suivant la revendication 1, caractérisé par le fait
que chaque liaison partielle part d'une borne du champ de couplage partiel, qui peut être raccordée au moyen de la commutation à l'unité de raccordement, par l'intermédiaire de laquelle passe respectivement les liaisons d'origine, qui est maintenue par cette liaison partielle à l'état interconnecté, de manière à éviter une interruption de la liaison.

# FIG 1

# FIG 2